# EUROPÄISCHE PATENTSCHRIFT

(11) **EP 3 120 441 B1**
(45) Veröffentlichungstag und Bekanntmachung des Hinweises auf die Patenterteilung: **29.05.2019**
(21) Anmeldenummer: 15718174.4
(22) Anmeldetag: 09.04.2015
(51) Int. Cl.: H02K 17/18, H02K 3/02, H02K 15/00, H02K 17/16

(54) **KURZSCHLUSSLÄUFER FÜR EINE ELEKTRISCHE MASCHINE**
SHORT CIRCUIT ROTOR FOR AN ELECTRIC MACHINE
ROTOR EN COURT-CIRCUIT POUR UNE MACHINE ÉLECTRIQUE

(30) Priorität: 06.05.2014 DE 102014208399
(43) Veröffentlichungstag der Anmeldung: 25.01.2017
(73) Patentinhaber: Siemens Aktiengesellschaft, 80333 München (DE)
(72) Erfinder: ARNDT, Tabea, 91056 Erlangen (DE); GROTENDORST, Jörg, 90475 Nürnberg (DE); POTORADI, Detlef, 97616 Bad Neustadt/Saale (Mühlbach) (DE); REINHARD, Markus, 67071 Ludwigshafen (DE)
(86) Internationale Anmeldenummer: PCT/EP2015/057692
(87) Internationale Veröffentlichungsnummer: WO 2015/169532

(56) Entgegenhaltungen:
- EP-A1- 2 579 433
- DE-A1-102008 025 694
- DE-A1-102008 025 702
- US-A1- 2011 163 627

## Beschreibung

Die Erfindung betrifft einen Kurzschlussläufer für eine elektrische Maschine mit einem Läuferkern und einem um den Läuferkern angeordneten elektrisch leitenden Läuferkäfig. Weiterhin betrifft die Erfindung eine elektrische Maschine mit einem solchen Kurzschlussläufer.

Viele elektrische Maschinen, vor allem Drehstrom-Asynchronmaschinen, werden unter Verwendung eines Kurzschlussläufers betrieben. Ein solcher Kurzschlussläufer weist typischerweise eine Mehrzahl von Längsstreben auf, die auch als Läuferstäbe bezeichnet werden und an den beiden axialen Enden des Läufers mit sogenannten Kurzschlussringen elektrisch verbunden sind. Somit ist die gesamte käfigartige Struktur des Kurzschlussläufers während des Betriebs der Maschine elektrisch kurzgeschlossen. Ein solcher Läuferkäfig wird daher auch als Kurzschlusskäfig bezeichnet. Dieser Läufertyp unterscheidet sich vom sogenannten Schleifringläufer, bei denen die Wicklungen des Läufers nicht untereinander kurzgeschlossen sind, sondern als separate Spulenwicklungen vorliegen und jeweils über Schleifringkontakte nach außen hin kontaktiert sind.

Bei bekannten Kurzschlussläufern bestehen die Längsstreben des Läuferkäfigs aus massiven Metallstäben aus Nichteisenmetallen wie Kupfer, Aluminium oder deren Legierungen. Diese Metallstäbe werden mit endseitig angeordneten Kurzschlussringen dauerhaft mechanisch und elektrisch verbunden, typischerweise über Einstecken und Einlöten in dafür vorgesehene Aussparungen in den Kurzschlussringen. Ein solcher Läuferkäfig ist in der EP 1039618A1 beschrieben.

Die EP 2579 433 A1 offenbart einen Rotor für einen Induktionsmotor. Der Induktionskäfig ist aus einem Verbundmaterial hergestellt, das aus einem leitfähigen Kernleiter und einer geflochtenen Kohlenstoffnanoröhrenstruktur besteht.

Die DE 10 2008 025 702 A1 offenbart ebenfalls eine Asynchronmaschine, deren Läuferwicklung zumindest teilweise aus einem Kohlenstoffnanoröhren aufweisenden Material besteht.

Die DE 10 2008 025 694 A1 offenbart eine elektrische Maschine deren Wicklungen durch Folienleiter ersetzt wurden, wobei der Folienleiter ein Kompositmaterial aus Kupfer und Kohlenstoffnanoröhren umfasst.

Die US 2001/0163627 A1 offenbart einen Käfigläufer, dessen Läuferstäbe aus einem Kompositmaterial aus Aluminium und Kohlenstoffnanoröhren bestehen. 1

Ein Nachteil dieser bekannten Läuferkäfige oder auch Kurzschlusskäfige ist der hohe Fertigungs- und Montageaufwand beim Herstellen dieser Verbindungen. Die Läuferkäfige sind beim Betrieb der elektrischen Maschinen hohen Zentrifugalkräften ausgesetzt. Daher müssen vor allem die Verbindungen hohen mechanischen Anforderungen genügen. Oft müssen die Verbindungen durch außen angebrachte Bandagen zusätzlich verstärkt werden, was wiederum den Fertigungsaufwand und den Platzbedarf des Rotors erhöht. Das hohe Gewicht der metallischen Läuferstäbe und der ebenfalls metallischen Kurzschlussringe wirkt sich außerdem nachteilig auf die Höhe der Zentrifugalkräfte aus.

Bei einer alternativen bekannten Ausführungsform wird der Kurzschlusskäfig in einem Vergussverfahren hergestellt, beispielsweise durch Druckgießen von Aluminium. Solche gegossenen Läuferkäfige finden hauptsächlich bei Maschinen kleiner und mittlerer Leistung Anwendung, da sie nur schwer auf große Abmessungen zu skalieren sind.

Aufgabe der Erfindung ist es daher, einen Kurzschlussläufer mit einem Läuferkäfig anzugeben, der die genannten Nachteile vermeidet. Insbesondere soll ein einfach und kostengünstig herzustellender Läuferkäfig angegeben werden, der auch für große Läuferabmessungen zur Verfügung steht.

Diese Aufgabe wird durch den in Anspruch 1 angegebenen Kurzschlussläufer gelöst.

Ein wesentlicher Vorteil des erfindungsgemäßen Kurzschlussläufers liegt in seiner einfachen Herstellbarkeit. Insbesondere mit den weiter unten beschriebenen Ausführungsformen mit den auf Kohlenstoffnanoröhren basierenden Fasern, Garnen, Seilen und Matten können elektrisch leitende Käfigstrukturen für den Kurzschlussläufer auf einfache Weise realisiert werden. Dabei kann die Anpassung der Geometrie der Käfigstruktur auf verschiedene Motortypen flexibel erfolgen, da keine vorgefertigten Stäbe, Ringe oder andere starre Teile mit der spezifischen Geometrie des Läuferkäfigs benötigt werden.

Ein weiterer Vorteil liegt darin, dass ein auf Kohlenstoffnanoröhren basierender Kurzschlusskäfig eine vergleichsweise geringe Masse aufweisen kann. Beispielsweise kann die Dichte von verdichteten Fasern aus Kohlenstoffnanoröhren zwischen 0.5 und 1.5 g/cm³ liegen. Bei vergleichbarer Stromtragfähigkeit können hiermit elektrisch leitende Elemente mit niedrigerer Masse verwendet werden als es bei einem metallischen Element möglich wäre. Somit fallen auch die Zentrifugalkräfte beim Betrieb der elektrischen Maschine geringer aus, und die mechanischen Belastungen der Bauteile sind entsprechend niedriger. Die elektrische Maschine kann daher auch bei höheren Drehzahlen betrieben werden als bei Verwendung bekannter Kurzschlussläufer.

Weiterhin sind auf Kohlenstoffnanoröhren basierende Materialien elektrisch gut leitfähig, mechanisch belastbar und chemisch beständig. Die mechanische Belastbarkeit und die elektrische Leitfähigkeit einzelner Kohlenstoffnanoröhren übertreffen die Werte für Metalle und metallische Legierungen um ein Mehrfaches. Auch wenn makroskopische Bauteile mit Fasern oder Garnen aus Kohlenstoffnanoröhren nicht die Werte für die einzelnen Röhren erreichen, so konnten doch die Werte für Leitfähigkeit und Belastbarkeit durch neue Herstellungsmethoden erheblich gesteigert werden. Beispielsweise werden von N. Behabtu et al. gesponnene Fasern aus Kohlenstoffnanoröhren beschrieben, die spezifische Widerstände zwischen 22 und 33 µOhm·cm aufweisen (N. Behabtu el al. in Science 339 (2013), S. 182-185). Obwohl die elektrische Leitfähigkeit dieser Materialien noch nicht so hoch ist wie die von Kupfer und seinen Legierungen, so ist doch die mechanische Festigkeit der von hochleitfähigen metallischen Legierungen zum Teil schon überlegen. Für Faserdicken im Bereich zwischen 8 und 10 µm wurden Elastizitätsmodule oberhalb von 100 GPa und Zugfestigkeiten im Bereich von 1 GPa gemessen. Auch wenn diese Werte noch ihn ähnlichen Bereichen liegen wie die von kupferhaltigen Werkstoffen, so ist ein besonderer Vorteil der Kohlenstoffnanoröhren darin zu sehen, dass ihre Leitfähigkeit und ihre mechanische Belastbarkeit auch bei einem Abknicken der Fasern oder einer Verbiegung der Bauteile nicht wesentlich beeinträchtigt wird. Gerade bei der Verwendung für die Käfigstruktur eines Läuferkäfigs ist aber eine solche Robustheit bei einer gebogenen Leiterführung von besonderem Vorteil.

Vorteilhafte Ausgestaltungen und Weiterbildungen des Kurzschlussläufers gehen aus den von Anspruch 1 abhängigen Ansprüchen hervor. So kann der Kurzschlussläufer zusätzlich folgende Merkmale aufweisen:
Der Läuferkäfig kann Fasern umfassen, die jeweils aus einer Vielzahl von Kohlenstoffnanoröhren gesponnen sind. Diese Ausführungsform ist deshalb vorteilhaft, weil einzelne Kohlenstoffnanoröhren im Allgemeinen nicht lang genug, nicht leitfähig genug und/oder mechanisch nicht belastbar genug für makroskopische Anwendungen sind. Durch die Anordnung vieler Kohlenstoffnanoröhren in einer gemeinsamen Faser kann ein größerer elektrischer Leiter zur Verfügung gestellt werden, der die mechanischen, elektrischen und geometrischen Anforderungen besser erfüllen kann als eine einzelne Röhre. Es kann in vielen Fällen vorteilhaft sein, eine Vielzahl solcher Fasern einzusetzen, um vorgegebene Werte für Stromtragfähigkeiten, mechanische Belastbarkeit und geometrische Abmessungen in einem makroskopischen Bauteil zu erreichen.

Die Fasern können entweder durch Feststoff-Spinnen oder durch Flüssigkeits-Spinnen erhalten werden und aus einer Vielzahl von Kohlenstoffnanoröhren aufgebaut sein. Der mittlere Durchmesser der einzelnen Fasern liegt dabei vorteilhaft zwischen 5 und 50 µm, besonders vorteilhaft zwischen 5 und 25 µm. Die Länge der den Faser zugrundeliegenden einzelnen Kohlenstoffnanoröhren kann vorteilhaft im Mittel oberhalb von 3 µm liegen. Besonders vorteilhaft kann die Mittlere Röhrenlänge weit über diesem Wert liegen, beispielsweise oberhalb von 100 µm oder sogar oberhalb von 1 mm. Wie im oben zitierten Science-Artikel von Behabtu et al. beschrieben, konnten jedoch auch mit Fasern aus Röhren mit Längen zwischen 3 µm und 11 µm hohe mechanische Festigkeiten und gute Leitfähigkeiten erreicht werden.

Bei einem Läuferkäfig mit stark gebogenen Abschnitten, insbesondere mit Knoten im Bereich von Verbindungsstellen, können vorteilhaft die einzelnen Fasern ebenfalls gebogen oder sogar abgeknickt angeordnet sein. Der Vorteil einer solchen Ausführungsform ist, dass Fasern aus Kohlenstoffnanoröhren auch im gebogenen und/oder abgeknickten Zustand kaum eine Beeinträchtigung der elektrischen Leitfähigkeit aufweisen.

Die Kohlenstoffnanoröhren enthaltenden Fasern können eine mittlere Zerreißfestigkeit von wenigstens 1 GPa aufweisen. Insbesondere durch Bündelung vieler solcher Fasern in ein oder mehrere größere Werkstücke kann ein elektrisch leitendes Element zu Verfügung gestellt werden, dass den hohen mechanischen Belastungen im Rotor einer elektrischen Maschine standhält. Somit kann die Ausfallsicherheit der Maschine verbessert werden, insbesondere kann eine mechanische Schädigung in einem geknickten Abschnitt und/oder an einer Verbindungsstelle zwischen verschiedenen Elementen der Käfigstruktur vorteilhaft vermieden werden.

Die Fasern können ein mittleres Elastizitätsmodul von wenigstens 50 GPa, besonders vorteilhaft wenigstens 100 GPa aufweisen, um eine hohe mechanische Belastbarkeit des Läuferkäfigs zu gewährleisten.

Der spezifische elektrische Widerstand der Kohlenstoffnanoröhren enthaltenden Fasern kann im Mittel unterhalb von 1000 µOhm·cm, besonders vorteilhaft unterhalb von 100 µOhm·cm liegen. Mit einem solchen Fasermaterial können bei vergleichbaren Leiterabmessungen Stromtragfähigkeiten erreicht werden, die zumindest ähnlich sind wie bei Verwendung metallischer Legierungen. Prinzipiell können mit Kohlenstoffnanoröhren enthaltenden Materialien vorteilhaft auch noch wesentlich höhere Leitfähigkeiten mit spezifischen Widerständen unterhalb von 10 µOhm·cm, besonders vorteilhaft unterhalb von 1 µOhm·cm erreicht werden.

Die Dichte der Kohlenstoffnanoröhren enthaltenden Fasern kann vorteilhaft im Mittel unterhalb von 1.5 g/cm³ liegen. Bei verdichteten Fasermaterialien liegt sie besonders vorteilhaft zwischen 0.5 und 1.5 g/cm³. Durch die Verdichtung auf derartige Werte kann eine besonders gute elektrische Leitfähigkeit und mechanische Festigkeit erreicht werden. Trotzdem ist die Dichte in diesem Bereich noch wesentlich geringer als die Dichte metallischer Werkstoffe, so dass durch das geringere Gewicht bei vergleichbaren Abmessungen geringere Fliehkräfte uns somit niedrigere mechanische Belastungen auftreten.

Die Kohlenstoffnanoröhren enthaltenden Fasern können besonders vorteilhaft unter Anliegen einer Zugspannung hergestellt sein. Auf diese Weise hergestellte Fasern können besonders robust gegenüber weiterer mechanischer Belastung sein und können auch eine verbesserte Leitfähigkeit, insbesondere in Richtung der Zugbelastung, aufweisen. Beispielsweise kann eine Trocknung der Fasern unter Zugbelastung erfolgen. Die vor der Trocknung vorliegende Rohform der Fasern kann dabei entweder mit oder ohne Vorliegen einer Zugbelastung hergestellt sein.

Die Kohlenstoffnanoröhren des Läuferkäfigs können eine Dotierung mit Iod aufweisen. Durch eine solche Dotierung kann die elektrische Leitfähigkeit wesentlich erhöht werden, bei gleichzeitig sehr hoher mechanischer Belastbarkeit.

Die einzelnen Kohlenstoffnanoröhren des Läuferkäfigs können als einwandige Röhren, als mehrwandige Röhren oder als eine Mischung dieser beiden Röhrentypen vorliegen. Vorteilhaft kann die Zahl der Wände einer Röhre im Mittel zwischen 1 und 5 liegen.

Der Durchmesser der einzelnen Kohlenstoffnanoröhren des Läuferkäfigs kann im Mittel vorteilhaft zwischen 1 und 6 nm liegen.

Der Läuferkäfig kann wenigstens ein aus Kohlenstoffnanoröhren enthaltenden Fasern geflochtenes oder gewebtes Element umfassen. Insbesondere kann der Läuferkäfig wenigstens eine Litze, ein Seil, einen Flachleiter und/oder eine Matte aus Kohlenstoffnanoröhren enthaltenden Fasern aufweisen. Mit anderen Worten, der Läuferkäfig kann ein aus einer Vielzahl von Fasern gebildetes textiles Element enthalten. Eine solche Ausführungsform ist besonders vorteilhaft, da der Läuferkäfig dann auf einfache und kostengünstige Weise durch Umwickeln, Umknüpfen und/oder Umflechten des Läuferkerns mit dem textilen Material gebildet werden kann. Besonders vorteilhaft weist das Kohlenstoffnanoröhren enthaltende textile Material eine zumindest teilweise reversible Verformbarkeit auf, so dass es mit einer Vorspannung um den Läuferkern gewickelt werden kann. Das textile Material kann dabei auch gebogene und/oder geknickte Bereiche aufweisen, beispielsweise können mehrere Abschnitte durch Knoten miteinander verbunden werden.

Der Läuferkäfig kann eine Mehrzahl von Längsstreben und wenigstens zwei endseitige Verbindungsstrukturen umfassen, die jeweils zumindest einen Teil der Längsstreben elektrisch leitfähig miteinander verbinden. In diesem Ausführungsbeispiel entsprechen die Längsstreben den starren Läuferstäben (oder auch Kurzschlussstäben) bekannter Kurzschlussläufer. Im Unterschied hierzu müssen die Längsstreben jedoch nicht starr sein. Sie sind aus einem Kohlenstoffnanoröhren enthaltenden Material gebildet, besonders vorteilhaft enthalten sie aus Kohlenstoffnanoröhren enthaltende Fasern. Sie können daher als flexible oder zumindest teilflexible Leiterstränge ausgebildet sein.

Die Längsstreben können parallel zur Richtung der Rotationsachse des Läufers ausgerichtet sein. Beispielsweise können sie alle parallel auf einer Zylinderfläche angeordnet sein, die der Außenfläche des Rotorkerns entspricht.

Alternativ können die Längsstreben auch in einem leichten Winkel zur Rotationsachse angeordnet sein. Durch eine solche leicht schräge Lage können die Anlaufbedingungen der elektrischen Maschine verbessert werden. Beispielsweise können das sogenannte Nutenpfeifen, inhomogene Drehmomente, magnetische Wirbelungen, Rüttelkräfte und/oder Bremsungen vermindert werden. Bei einer solchen Ausführungsform liegen die Längsstreben nicht mehr genau parallel zueinander, sondern sind in unterschiedlichen Richtungen, aber vorteilhaft um einen betragsmäßig gleichen Winkel gegen die Rotationsachse des Läufers geneigt. Eine solche Konfiguration wird auch als "einfach geschränkt" bezeichnet. Alternativ können bei einer "doppelt geschränkten" oder auch "mehrfach geschränkten" Ausführungsform unterschiedliche axiale Bereiche der Längsstreben mit verschiedenen Neigungen bezüglich der Rotationsachse ausgebildet sein. Diese Schränkung wird in der Fachwelt alternativ auch als Schrägung oder Drall bezeichnet. Der Winkel der Längsstreben mit der Rotationsachse kann beispielsweise bis zu +/- 20 Grad betragen. Besonders vorteilhaft liegt der Winkel bei einer gegebenen Nutenzahl n der Ständerwicklung bei einem Wert von etwa 360°/n.

Die Längsstreben können zumindest in den axialen Endbereichen des Läufers mit ringförmigen Strukturen elektrisch verbunden sein, so dass aus den Streben eine insgesamt kurzgeschlossene Käfigstruktur entsteht. Die Verbindungsstrukturen entsprechen dann den Kurzschlussringen in herkömmlichen Kurzschlusskäfigen. Zusätzlich können auch auf axial weiter innenliegenden Abschnitten weitere Verbindungsstrukturen vorgesehen sein.

In einer alternativen Ausführungsform ist es auch möglich, dass durch die Verbindungsstrukturen nicht alle Längsstreben ringförmig miteinander verbunden sind. Es kann beispielsweise durch jede der wenigstens zwei Verbindungsstrukturen nur eine Teilmenge der Längsstreben elektrisch leitfähig miteinander verknüpft werden, so dass komplexere Käfigstrukturen beispielsweise mit mehreren Teilkäfigen und/oder seriellen elektrischen Verbindungen zwischen den einzelnen Längsstreben gebildet werden können.

Der Läuferkäfig kann einen oder mehrere aus Kohlenstoffnanoröhren gebildete Seilstränge umfassen. Besonders vorteilhaft sind dann zumindest die Längsstreben des Läuferkäfigs im Wesentlichen aus solchen Seilsträngen gebildet. Dabei kann jede Längsstrebe entweder nur einen oder auch mehrere Seilstränge umfassen. Zusätzlich können auch die ringförmigen Verbindungsstrukturen vorteilhaft aus Seilsträngen mit Kohlenstoffnanorohren gebildet sein.

Besonders vorteilhaft kann sich dann zumindest ein Teil der Seilstränge sowohl über einen Teil der Längsstreben als auch über wenigstens eine Verbindungsstruktur erstrecken. Mit anderen Worten, Längsstreben und Verbindungsstrukturen können zumindest zum Teil aus den gleichen durchgehenden Strängen gebildet sein und dadurch ineinander übergehen. Die Bildung einer zusätzlichen elektrischen Verbindung zwischen separaten Leiterteilen wie beispielsweise durch einen Lötprozess kann dadurch vorteilhaft vermieden werden.

Die übergeordnete Struktur des Läuferkäfigs kann besonders vorteilhaft im Wesentlichen durch miteinander verbundene Kohlenstoffnanoröhren enthaltende Seilstränge gebildet werden. Dies ist besonders vorteilhaft für die mechanische Robustheit und die elektrische Leitfähigkeit, weil dann an den Übergangsstellen zwischen Längsstreben und Verbindungsringen keine nachträglichen leitfähigen Verbindungen geschaffen werden müssen. Der Läuferkäfig kann also als übergeordnete Struktur aus einem oder mehreren Seilsträngen geknüpft werden, wobei diese Struktur einfach herzustellen und mechanisch sehr stabil ist. Insbesondere können unterschiedliche Geometrien des Läuferkäfigs für unterschiedliche Läuferabmessungen aus gleichartigen Seilsträngen geknüpft werden, ohne dass wie bei herkömmlichen Läuferkäfigen speziell konfigurierte Stäbe, Ringe und andere angepasste vorgefertigte Bauteile benötigt werden.

Die Bereiche der Längsstreben und Verbindungsstrukturen des Läuferkäfigs können vorteilhaft durch Knoten in den Seilsträngen miteinander verknüpft sein. Die Verbindungsstrukturen haben die Form von Kurzschlussringen, die jeweils mit den Enden aller Längsstreben verbunden sind. An jeder Verbindungsstelle zwischen Längsstrebe und Kurzschlussring besteht somit eine Drei-Wege-Verbindung, die leicht über einen Knoten hergestellt werden kann. Alternativ können die Seilstränge an den Verbindungsstellen auch umeinander gewunden werden, ohne dass ein Knoten im eigentlichen Sinne gebildet wird. In beiden Fällen werden die Seilstränge stark geknickt oder zumindest gebogen. Dies führt jedoch bei auf Kohlenstoffnanoröhren basierenden Fasern höchstens zu einer sehr geringfügigen Änderung der elektrischen und mechanischen Eigenschaften.

Der Läuferkern kann im Wesentlichen aus einem weichmagnetischen Material, insbesondere aus einem Eisen enthaltenden Material zur Führung des magnetischen Flusses gebildet sein. Wie bei herkömmlichen Kurzschlussläufern kann der Läuferkern aus einer Vielzahl von in axialer Richtung gestapelten Blechen aufgebaut sein. Er kann jedoch alternativ auch aus einem weichmagnetischen Massivkörper gebildet sein.

Der Läuferkern kann eine Mehrzahl von Nuten aufweisen, die eine Mehrzahl von Längsstreben des Läuferkäfigs aufnehmen. Besonders vorteilhaft können dann die Kohlenstoffnanoröhren enthaltenden Seilstränge des Läuferkäfigs in diese Nuten eingewickelt oder eingeknüpft werden. Alternativ oder zusätzlich können in den axialen Endbereichen auch Nuten für die Verbindungsstrukturen, insbesondere ringförmige Verbindungsstrukturen vorgesehen sein. Sowohl bei einem massiven Läuferkern als auch bei einem geblechten Läuferkern können Nuten zur Halterung und Führung der verschiedenen Segmente des Läuferkäfigs vorgesehen sein.

Insbesondere bei der Ausführungsform mit Nuten im Läuferkern ist es vorteilhaft, wenn der Läuferkäfig wenigstens einen aus Kohlenstoffnanoröhren gebildeten Seilstrang umfasst, der unter Vorspannung in die Nuten des Läuferkerns eingewickelt ist. Bei dieser Ausführungsform kann die Vorspannung so gewählt werden, dass der Läuferkäfig und der Läuferkern zusammen eine mechanisch selbst tragende Struktur bilden. Dann werden keine zusätzlichen Bandagen benötigt, um den Läuferkäfig mechanisch stabil auf dem Körper des Läuferkerns zu halten. Die Vorspannung kann so gewählt werden, dass der Läuferkäfig auch bei hohen Drehzahlen beim Betrieb der elektrischen Maschine eigenstabil auf dem Läuferkern bleibt. Auch bei einer Ausführungsform mit einem Blechpaket als Läuferkern kann die Spannung der den Läuferkäfig bildenden Seilstränge so groß gewählt sein, dass die Bleche durch den Läuferkäfig zusammengehalten werden. Mit anderen Worten kann der Läuferkäfig dann auch die Funktion einer aus dem Stand der Technik bekannten Läuferdruckscheibe übernehmen, mit der das Blechpaket üblicherweise fixiert wird.

Sowohl die endseitigen Verbindungsstrukturen als auch die Längsstreben können unter Spannung um den Läuferkern angeordnet werden. Diese Spannung kann auch dazu verwendet werden, eine vorbestimmte Leitfähigkeit der Seilstränge zu erzielen, da bei Fasern auf der Grundlage von Kohlenstoffnanoröhren die Leitfähigkeit in Längsrichtung von einer angelegten Zugspannung abhängt.

Der wenigstens eine Seilstrang des Läuferkäfigs kann in mehreren Lagen in die Nuten des Läuferkäfigs eingewickelt sein. Mit anderen Worten kann jede Längsstrebe dann aus einer Mehrzahl von Windungen des Seilstranges oder der Seilstränge gebildet sein. Bei dieser Ausführungsform können auf besonders einfache Weise auch komplexere Querschnittsformen der Längsstreben durch geeignete Formgebung des Querschnitts der Nuten erreicht werden. Neben einfachen kreisförmigen, halbkreisförmigen oder U-förmigen Querschnitten können so auch rechteckige Querschnitte oder aus mehreren Rechtecken gestuft zusammengesetzte Querschnitte der Längsstreben erzielt werden. Weiterhin können die Nuten und somit die darin angeordneten Längsstreben beispielsweise eine sich radial nach außen konisch vergrößernde Querschnittsform aufweisen. Sie können sich zur Außenwand des Läuferkerns hin öffnen, oder die Öffnung kann sich alternativ zur Außenwand hin verengen. Durch die Form der Nuten können auch aufwendigere Querschnittsformen wie beispielsweise zusammengesetzte Formen mit mehreren, unter Umständen durch Streustege verbundenen Längsstreben für jede Winkelposition gebildet werden.

Bei einem einlagig gewickelten Läuferkäfig dagegen entspricht der Querschnitt einer Längsstrebe dem Querschnitt eines Seilstrangs, also im einfachsten Fall dem Querschnitt eines im Wesentlichen symmetrischen Litzenbündels und/oder einem annähernd kreisförmigen Querschnitt. Anstelle eines annähernd rotationssymmetrischen Seiles kann aber generell auch ein auf Kohlenstoffnanoröhren basierendes Flachband oder ein Stapel solcher Flachbänder zum Einsatz kommen. Dann weisen die Längsstreben einen näherungsweise den Querschnitt eines flachen Rechtecks auf.

Der Läuferkäfig kann besonders vorteilhaft ein Netz mit Seilsträngen aus Kohlenstoffnanoröhren umfassen, wobei dieses Netz um den Läuferkern gewickelt ist. Insbesondere kann es sich dabei um ein vorgefertigtes, geknüpftes Netz handeln, welches dann um die Rotationsachse herum auf den Läuferkern gewickelt wird. Bei nur einer Umwicklung können auf diese Weise Längsstreben mit jeweils einem Seilstrang gebildet werden, oder es können durch mehrlagiges Wickeln Strukturen mit mehreren Seilsträngen in jeder Nut gebildet werden. Nach dem Umwickeln können die verschiedenen Lagen der netzartigen Wicklung beispielsweise durch Verknoten miteinander verbunden werden.

Im einfachsten Fall kann ein solches vorgefertigtes Netz eine einfache Reihe von Längsstreben zwischen zwei seitlichen Verbindungsseilen aufweisen. Mit anderen Worten kann dieses Netz nach der Art einer einfachen Strickleiter aufgebaut sein, bei der auch die Sprossen aus Seilsträngen geknüpft sind. Wenn die Abstände dieser Sprossen oder Längsstreben auf die Abstände der Nuten angepasst sind, kann ein solches vorgeknüpftes Netz insbesondere mit einer vorbestimmten Spannung auf den Läuferkern aufgewickelt werden, und es entsteht die gewünschte Käfigstruktur aus Kohlenstoffnanoröhren-Seil.

Um komplexere Käfigstrukturen zu erzeugen, können auch aufwändigere Netze aus solchen Seilsträngen geknüpft werden. Beispielsweise können die Längsstreben zusätzlich über weitere, innenliegende Verbindungsstränge verbunden sein, die nach dem Aufwickeln des Netzes innenliegende Verbindungsringe bilden. Auch für solche innenliegenden Verbindungsringe sind dann zweckmäßig auf dem Läuferkern entsprechende Nuten angebracht. In dieser Ausführungsform ähnelt das vorgeknüpfte Netz dann einem Fischernetz mit einer Mehrzahl von nebeneinander liegenden Maschen.

Mit dem beschriebenen Verfahren können auch komplexere, beispielsweise einfach oder mehrfach geschränkte Käfigstrukturen erzeugt werden, bei denen die Längsstreben in einem vorgegebenen Winkel zur Rotationsachse des Läufers angeordnet sind. Diese Winkel können dann durch einen entsprechenden Winkel der Nuten des Läuferkerns und/oder durch Winkel in dem vorgefertigten aufzuwickelnden Netz vorgegeben sein.

Alternativ zu einem geknüpften Netz kann der Läuferkäfig auch aus einer textilen Matte mit Fasern aus Kohlenstoffnanoröhren gefertigt sein. Hierzu kann die Matte mit Ausnehmungen versehen sein, wobei wiederum eine gitterartige Struktur mit einer Mehrzahl von Längsstegen und wenigstens zwei endseitigen Querstegen verbleibt. Auch diese gitterartige Matte kann dann wiederum um die Rotationsachse auf den Läuferkern gewickelt werden, wobei die Längsstege dann zweckmäßig wiederum in Nuten des Läuferkerns zu liegen kommen. Die Ausnehmungen können beispielsweise durch Ausstanzen gebildet werden.

Die Vorteile der erfindungsgemäßen elektrischen Maschine ergeben sich analog zu den beschriebenen Vorteilen des Kurzschlussläufers. Die elektrische Maschine kann dabei entweder ein Motor oder ein Generator sein. Besonders vorteilhaft kann es sich um eine Asynchronmaschine handeln.

Die Erfindung wird nachfolgend anhand zweier bevorzugter Ausführungsbeispiele unter Bezugnahme auf die angehängten Zeichnungen beschrieben, von denen:
- Fig. 1: eine schematische perspektivische Ansicht eines Kurzschlussläufers nach einem ersten Ausführungsbeispiel zeigt,
- Fig. 2: eine schematische perspektivische Ansicht eines massiven Läuferkerns nach einem zweiten Ausführungsbeispiel zeigt,
- Fig. 3: eine schematische Aufsicht einer für die Umwicklung des in Fig. 2 gezeigten Läuferkerns geeigneten Matte zeigt,
- Fig. 4: einen Querschnitt zweier Nuten im Läuferkern nach einem dritten Ausführungsbeispiel zeigt,
- Fig. 5: einen Querschnitt zweier Nuten im Läuferkern nach einem vierten Ausführungsbeispiel zeigt,
- Fig. 6: einen Querschnitt zweier Nuten im Läuferkern nach einem fünften Ausführungsbeispiel zeigt,
- Fig. 7: eine schematische Darstellung der elektrischen Verbindung der Längsstreben nach einem sechsten Ausführungsbeispiel zeigt und
- Fig. 8: eine schematische Darstellung einer alternativen elektrischen Verbindung nach einem siebten Ausführungsbeispiel zeigt.

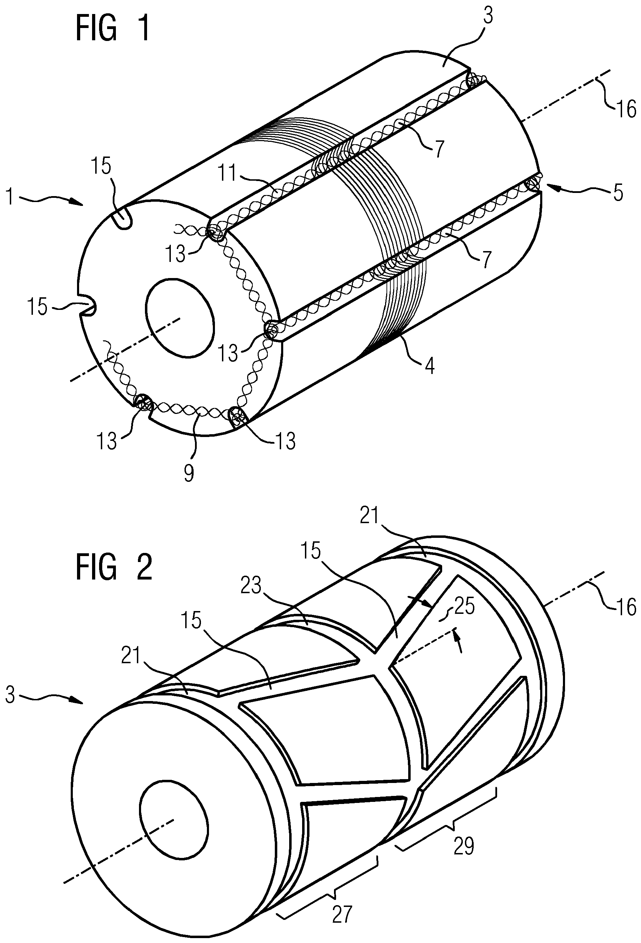

Fig. 1 zeigt eine schematische perspektivische Ansicht eines Kurzschlussläufers 1 nach einem ersten Ausführungsbeispiel der Erfindung. Gezeigt ist ein Läuferkern 3 mit im Wesentlichen kreiszylindrischer Grundform, wobei die zentrale Achse des Zylinders der Rotationsachse 16 des Läufers 1 bei seinem Betrieb in einer elektrischen Maschine entspricht. Der Läuferkern 3 ist, wie im Mittelbereich schematisch angedeutet, auf seiner ganzen axialen Länge aus einem Stapel von Eisenblechen 4 gebildet. Die Eisenbleche 4 haben im Wesentlichen die Grundform von Kreisscheiben und sind in ihren Randbereichen mit Einkerbungen versehen. Die Einkerbungen sind so zueinander ausgerichtet, dass sich über den gesamten Läuferkern 3 erstreckende Nuten 15 ausbilden, die in diesem Beispiel im Wesentlichen parallel zu der Rotationsachse 16 ausgerichtet sind.

Der so aufgebaute Läuferkern 3 ist mit einem Netz von zusammengeknüpften Seilsträngen 11 umspannt, so dass dieses Netz einen den Läuferkern 3 umschließenden Läuferkäfig 5 bildet. Der Läuferkäfig 5 weist eine Mehrzahl von Längsstreben 7 auf, die in die länglichen Nuten 15 eingelegt sind. Außerdem weist der Läuferkäfig 5 an seinen axialen Endseiten zwei ringförmige Verbindungsstrukturen 9 auf, die die Endbereiche der Längsstreben 7 auf jeder der beiden Seiten miteinander verbinden.

Die den Läuferkäfig 5 bildenden Seilstränge 11 sind aus Kohlenstoffnanoröhren enthaltenden Fasern gebildet. Daher weisen die Seilstränge 11 eine hohe elektrische Leitfähigkeit auf, und der Läuferkäfig 5 ist über seine gesamte Struktur hinweg elektrisch kurzgeschlossen. Anstelle der in Fig. 1 schematisch angedeuteten relativ groben Seilstruktur mit wenigen Litzen können hierbei auch andere, wesentlich komplexere und/oder feinere Seil- oder Garntypen verwendet werden. Jeder Seilstrang 11 kann dabei eine Vielzahl von Teilsträngen umfassen. Dabei kann durch die Formgebung der Nuten 15 auch eine komplexere Querschnittsform erreicht werden, die von der annähernd rotationssymmetrischen Form eines einfachen Seilstrangs abweicht.

Die Längsstreben 7 sind im gezeigten Ausführungsbeispiel jeweils an ihren beiden Enden durch Knoten 13 mit den ringförmigen Verbindungsstrukturen 9 verbunden. Dabei können entweder mehrere unterschiedliche Seilstränge 11 aneinandergeknüpft sein, oder es kann das gesamte Netzwerk des Läuferkäfigs 5 aus einem einzigen zusammenhängenden Seilstrang 11 geknüpft sein. Das dem Läuferkäfig 5 zugrundeliegende Netz kann bei der Herstellung des Kurzschlussläufers 1 als vorgefertigtes Netz in der Art einer komplett aus Seilmaterial bestehenden Strickleiter vorliegen und dann in dieser Form um den Läuferkern 3 gewickelt werden. Hierbei können auch mehrere Windungen des Netzes um den Läuferkern gebildet werden, so dass in jeder Nut 15 mehrere Längsstreben 7 zu liegen kommen. Hierfür kann für die weiter außen liegenden Windungen der Abstand der eingeknüpften Längsstreben erhöht werden. Alternativ kann das Netz aber auch symmetrisch geknüpft sein, und der bei radial weiter außenliegenden Lagen benötigte höhere Abstand kann durch die Dehnbarkeit der die Verbindungsstruktur 9 bildenden Seilstränge 11 erreicht werden.

Der Läuferkäfig 5 kann unter Spannung um den Läuferkern 3 gewickelt oder geknüpft werden, so dass der Läuferkern 3 zusammen mit dem ihn umschließenden Läuferkäfig 5 eine mechanisch eigenstabile Struktur ausbilden kann. Mit anderen Worten, der um den Läuferkern 3 geknüpfte Käfig kann den Blechstapel mechanisch fest aufeinander halten. Die Spannung auf den Seilsträngen 11 kann ausreichend hoch gewählt sein, um den mechanischen Belastungen durch die Fliehkräfte bei hohen Drehzahlen einer elektrischen Maschine standzuhalten.

In Fig. 1 ist der Übersichtlichkeit halber nur ein Teil der vorderen ringförmigen Verbindungstruktur 9 gezeigt, und nur ein Teil der Nuten 15 ist mit den Längsstreben 7 gefüllt. Dies dient nur dazu, die Nuten 15 des Läuferkerns 3 besser zu zeigen. Bei einem fertig aufgebauten Läufer 1 sollen alle Nuten 15 mit Längsstreben 7 ausgefüllt sein, und die Verbindungsstrukturen 9 sollen auf beiden Seiten ringförmige geschlossene Leiter bilden. In Fig. 1 ist schematisch ein Läuferkäfig 5 mit nur sechs Längsstreben 7 angedeutet. Diese Anzahl soll beispielhaft auch für eine wesentlich höhere Anzahl an Längsleitern stehen. In realen elektrischen Maschinen können Läuferkäfige mit beispielsweise zwischen 10 und 50 Längsleitern zum Einsatz kommen. Weiterhin können die Längsleiter 7 auch in einem Winkel zur Rotationsachse angeordnet sein, beispielsweise in einer einfach geschränkten oder doppelt geschränkten Konfiguration.

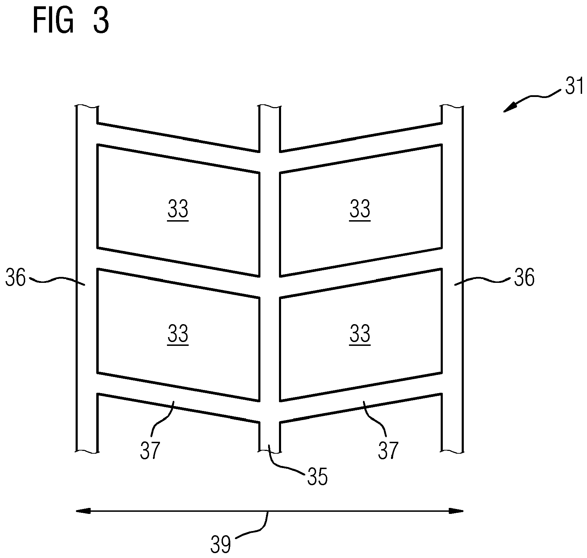

Fig. 2 zeigt eine schematische perspektivische Ansicht eines Läuferkerns 3, der für einen Kurzschlussläufer 1 nach einem zweiten Ausführungsbeispiel der Erfindung vorgesehen ist. In diesem Beispiel ist der Läuferkern 3 nicht aus Blechen aufgebaut, sondern er ist ein Massivkörper aus weichmagnetischem Eisen. In dem kreiszylindrischen Grundkörper sind Nuten vorgesehen, in die die Struktur eines passenden Läuferkäfigs 5 eingelegt werden kann. Die Struktur einer zu diesem Läuferkern 3 passenden gitterförmigen Matte 31 ist als Ausschnitt in Fig. 3 gezeigt.

Der in Fig. 2 gezeigte Läuferkern 3 weist sowohl Nuten 15 für die Längsstreben 7 des Läuferkäfigs als auch zwei ringförmige endseitige Nuten 21 für die ringförmigen Verbindungsstrukturen 9 des Läuferkäfigs und zusätzlich eine ringförmige mittlere Nut 23 für einen Mittelsteg 35 der einzuwickelnden gitterartigen Matte 31. In diesem zweiten Ausführungsbeispiel sind die Nuten 15 für die Längsstreben 7 nicht exakt parallel zu der Rotationsachse ausgerichtet, sondern sie sind in einem leichten Winkel in einer doppelt geschränkten Konfiguration angeordnet: In einem ersten radialen Bereich 27 sind die Nuten 15 in einer Richtung gegen die Rotationsachse 16 umlaufend angewinkelt, und in einem zweiten radialen Bereich 29 sind sie in einer umgekehrten Richtung gegen die Rotationsachse 16 umlaufend angewinkelt. Hierdurch ergibt sich ein verbessertes Anlaufverhalten des Kurzschlussläufers 1 bei seinem Betrieb in einer elektrischen Maschine.

Die in Fig. 3 gezeigte Matte 31 ist aus Fasern gebildet, die wiederum Kohlenstoffnanoröhren enthalten. Beispielsweise können die der Matte zugrundeliegenden Fasern hauptsächlich aus Kohlenstoffnanoröhren aufgebaut sein. Hierdurch ist die gesamte Gitterstruktur der Matte 31 elektrisch leitfähig. Beim Einwickeln der gezeigten Matte 31 in die Nuten 15, 21 und 23 des Läuferkerns 3 entsteht daher eine elektrisch leitende und in sich kurzgeschlossene Käfigstruktur. Dazu können die Endbereiche der Matte zusätzlich elektrisch leitfähig miteinander verbunden werden, so dass ein elektrisch geschlossener Zylinderkäfig entsteht.

Passend zur gewinkelten Struktur der Nuten 15 in Fig. 2 weist die Matte 31 eine grätenartige Struktur aus zwei Sätzen von umgekehrt angeschrägten Längsstegen 37 auf. Zwischen diesen beiden Sätzen von Längsstegen 37 befindet sich ein Mittelsteg 35, der in die mittlere Nut 23 des Läuferkerns 3 eingelegt wird. An den Seiten der Gitterstruktur befinden sich zwei Seitenstege 36, die in die ringförmigen endseitigen Nuten 21 eingelegt werden. Die gitterartige Matte kann ähnlich wie das Seilnetz aus dem ersten Ausführungsbeispiel entweder in einer Lage oder auch in mehreren Lagen um den Läuferkern 3 herumgewickelt werden. Dabei entsteht dann ein Läuferkäfig 5 mit entweder einlagigen oder mehrlagigen Längsstreben 7.

In Fig. 3 ist nur ein Ausschnitt aus einer wesentlich längeren Bahn der gitterartigen Matte 31 gezeigt. Solche Matten 31 können beispielsweise auf einer Vorratsrolle zur Verfügung gestellt werden und bei der Herstellung des Kurzschlussläufers 1 unter einer Zugspannung um den Läuferkern 3 herum gewickelt werden. Die Breite der Mattenbahn 39 entspricht dabei der axialen Länge des zu bildenden Läuferkäfigs.

Die gitterartige Matte 31 kann beispielsweise aus einer großflächigen textilen Bahn durch Ausstanzen oder Ausschneiden der benötigten Ausnehmungen 33 gebildet werden. Für ein solches Verfahren ist eine filzartige flächige Matte besonders geeignet. Alternativ kann die Matte 31 auch gleich mit der benötigten Gitterstruktur gewebt, geflochten, gestrickt oder auf andere Weise aus Fasern auf der Grundlage von Kohlenstoffnanoröhren hergestellt werden.

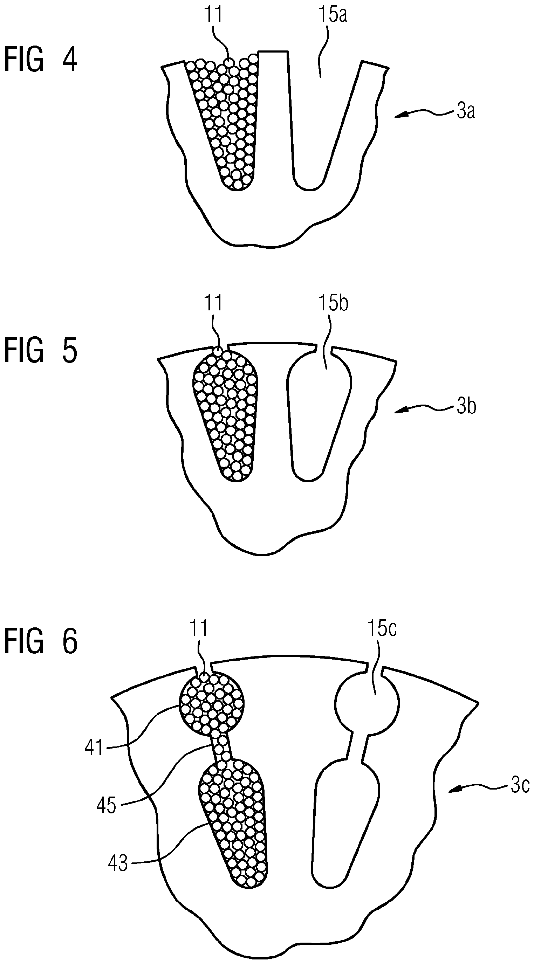

Fig. 4 zeigt einen Ausschnitt zweier Nuten 15a in einem Läuferkern 3a nach einem dritten Ausführungsbeispiel der Erfindung. Gezeigt ist ein schematischer Querschnitt, aus dem das Profil der Nuten 15a und somit die Querschnittsform der durch in den Nuten 15a einliegende Seilstränge 11 gebildeten Längsstreben 7 ersichtlich ist. Hierbei ist exemplarisch die linke der beiden gezeigten Nuten 15a bereits mit Seilsträngen 11 aufgefüllt dargestellt, und die rechte der beiden Nuten 15a ist noch leer dargestellt. In diesem Beispiel öffnen sich die Nuten 15a nach radial außen zur Oberfläche des Läuferkerns 3a hin, so dass außen ein größerer Leiterquerschnitt der aus den Seilsträngen 11 gebildeten Längsstrebe 7 entsteht.

Ein hierzu alternatives viertes Ausführungsbeispiel ist schematisch in Fig. 5 gezeigt. Auch hier sind zwei Nuten 15b in einem Läuferkern 3b gezeigt, wobei wiederum die linke der beiden Nuten 15b exemplarisch mit Seilsträngen 11 gefüllt dargestellt ist. Auch hier öffnen sich die Nuten 15b zunächst konisch nach außen hin, sodass der Querschnitt der Leiterstränge nach außen hin vergrößert ist. Nahe der Oberfläche des Läuferkerns 3b ist die Öffnung der Nuten 15b jedoch verengt.

In Fig. 6 ist ein weiteres Ausführungsbeispiel gezeigt, bei dem die Nuten 15c des Läuferkerns 3c jeweils aus zwei größeren Teilöffnungen gebildet sind, die untereinander mit einem schmalen Steg verbunden sind. Durch Einlegen von Seilsträngen 11 in diese komplex geformten Nuten wird in jeder Nut eine Längsstrebe 7 gebildet, die wiederum eine Oberstrebe 41, eine Unterstrebe 43 und einen diese beiden Teilstreben verbindenden Streusteg 45 umfasst.

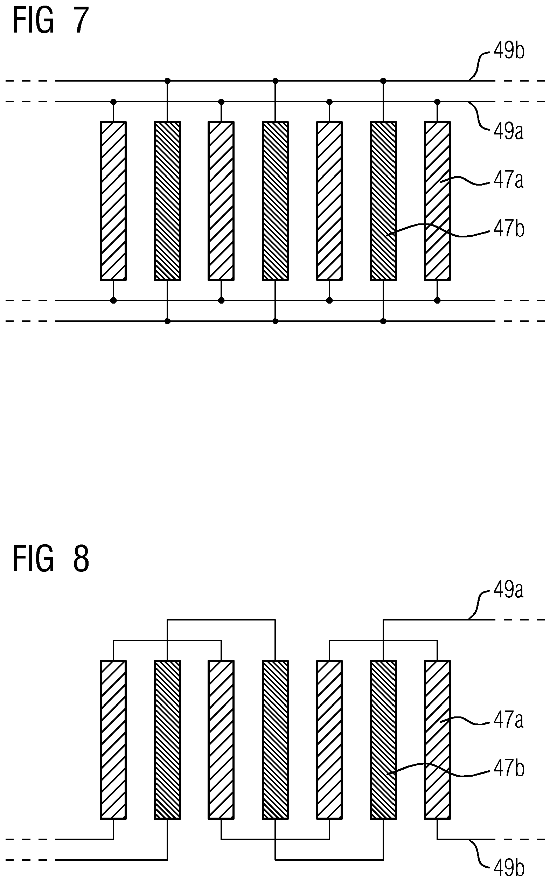

In Fig. 7 ist eine schematische Darstellung der elektrischen Verbindung der Längsstreben 47a und 47b eines Kurzschlussläufers 1 nach einem sechsten Ausführungsbeispiel der Erfindung gezeigt. In diesem Ausführungsbeispiel sind die Längsstreben 47a und 47b an den beiden Endseiten nicht alle ringförmig miteinander verbunden, sondern die Verbindungsstrukturen sind so ausgestaltet, dass sich zwei ineinander geschachtelte Teilkäfige 49a und 49b ausbilden. Hierzu sind an jedem axialen Ende des Kurzschlussläufers 1 zwei Verbindungsstrukturen vorgesehen, die in der Fig. 7 durch die beiden oben und unten verlaufenden elektrischen Verbindungen wiedergegeben sind. Jede dieser Verbindungsleitungen verknüpft jede zweite der Längsstreben so miteinander, dass aus zwei elektrisch getrennten Sätzen von Längsstreben 47a und 47b jeweils zwei elektrisch unabhängige Teilkäfige 49a und 49b des Kurzschlussläufers gebildet werden. Ein Vorteil einer solchen Konfiguration kann unter anderem darin liegen, dass für jeden der Teilkäfige 49a und 49b eine höhere Schrägung der Längsstreben 47a und 47b ausgebildet werden kann.

Ein alternatives Beispiel für eine elektrische Verbindung der Längsstreben 47a und 47b ist in Fig. 8 dargestellt. Auch hier bilden die Längsstreben zwei elektrisch voneinander unabhängige Teilmengen 47a und 47b, die jeweils untereinander zu zwei Teilkäfigen 49a und 49b verbunden sind. Im Unterschied zum vorherigen Beispiel sind die Längsstreben 47a, 47b in den Teilkäfigen 49a, 49b jedoch nicht parallel sondern seriell miteinander verbunden. Die beiden Paare von endseitigen Verbindungsstrukturen sind dazu nicht als ringförmig geschlossene Verbindungen ausgebildet, sondern es besteht innerhalb eines Teilkäfigs 49a oder 49b auf jeder der beiden Endseiten abwechselnd eine Verbindung zwischen den zusammengehörigen Längsstreben 47a oder 47b eines Teilkäfigs 49a oder 49b.

In ähnlicher Weise können auch seriell verbundene Käfigstrukturen mit nur einem übergeordneten Käfig anstatt mit zwei oder auch mehreren Teilkäfigen gebildet werden. Es ist eine Vielzahl von unterschiedlichen Konfigurationen denkbar, da erstens die Zahl der Teilkäfige variiert werden kann und zweitens auch Kombinationen von seriell und parallel verbundenen Längsstreben innerhalb jedes Teilkäfigs vorliegen können. Die Kurzschlussläufer nach der vorliegenden Erfindung eigenen sich in jedem Fall besonders gut zur Ausbildung solcher komplexerer Strukturen, da sich gerade durch die Verknüpfung von textilen Strukturen, beispielsweise durch das Verknoten von Seilsträngen, besonders leicht solche verschachtelten Käfigstrukturen bilden lassen. Besonders vorteilhaft können Kurzschlussläufer mit wenigstens teilweise seriell verknüpften Längsstreben in elektrischen Maschinen mit Zahnspulenwicklungen im Ständer zum Einsatz kommen.

## Patentansprüche

1. Kurzschlussläufer (1) für eine elektrische Maschine mit einem Läuferkern (3) und einem um den Läuferkern (3) angeordneten elektrisch leitenden Läuferkäfig (5),
wobei der Läuferkäfig (5) Fasern umfasst, die jeweils aus einer Vielzahl von Kohlenstoffnanoröhren gesponnen sind,
**dadurch gekennzeichnet, dass** der Läuferkäfig (5) aus flexiblen Leitersträngen gebildet ist, wobei die Leiterstränge ein aus einer Vielzahl von Fasern gebildetes textiles Element umfassen, das wenigstens ein aus Kohlenstoffnanoröhren enthaltenden Fasern gewebtes Element (31) oder wenigstens einen aus Kohlenstoffnanoröhren enthaltenden Fasern gebildeten Seilstrang (11) umfasst.

2. Kurzschlussläufer (1) nach Anspruch 1, bei dem der Läuferkäfig (5) eine Mehrzahl von Längsstreben (7) und zwei endseitige Verbindungsstrukturen (9) umfasst, die jeweils zumindest einen Teil der Längsstreben (7) elektrisch leitfähig miteinander verbinden.

3. Kurzschlussläufer (1) nach einem der vorhergehenden Ansprüche, bei dem der Läuferkäfig (5) mehrere aus Kohlenstoffnanoröhren gebildete Seilstränge (11) umfasst.

4. Kurzschlussläufer (1) nach Anspruch 3, bei dem der Läuferkäfig (5) eine Mehrzahl von Längsstreben (7) und zwei endseitige Verbindungstrukturen (9) aufweist, wobei sich zumindest ein Teil der Seilstränge (11) sowohl über einen Teil der Längsstreben (7) als auch über wenigstens eine Verbindungsstruktur (9) erstreckt.

5. Kurzschlussläufer (1) nach Anspruch 3 oder 4, bei dem der Läuferkäfig (5) eine Mehrzahl von Längsstreben (7) und zwei endseitige Verbindungstrukturen (9) aufweist, wobei die Längsstreben (7) und die Verbindungsstrukturen (9) durch Knoten (13) in den Seilsträngen (11) mit einander verknüpft sind.

6. Kurzschlussläufer (1) nach einem der vorhergehenden Ansprüche, bei dem der Läuferkern (3) im Wesentlichen aus einem weichmagnetischen Material gebildet ist.

7. Kurzschlussläufer (1) nach einem der vorhergehenden Ansprüche, **dadurch gekennzeichnet, dass** der Läuferkern (3) eine Mehrzahl von Nuten (15) aufweist, die eine Mehrzahl von Längsstreben (7) des Läuferkäfigs (5) aufnehmen.

8. Kurzschlussläufer (1) nach Anspruch 7, **dadurch gekennzeichnet, dass** der Läuferkäfig (5) wenigstens einen aus Kohlenstoffnanoröhren gebildeten Steilstrang (11) umfasst, der unter Vorspannung in die Nuten (15) des Läuferkerns (3) eingewickelt ist.

9. Kurzschlussläufer (1) nach Anspruch 8, **dadurch gekennzeichnet, dass** der Läuferkäfig (5) und der Läuferkern (3) zusammen eine mechanisch selbst tragende Struktur bilden.

10. Kurzschlussläufer (1) nach einem der Ansprüche 8 oder 9, **dadurch gekennzeichnet, dass** der wenigstens eine Seilstrang (11) des Läuferkäfigs (5) in mehreren Lagen in die Nuten (15) des Läuferkäfigs (5) eingewickelt ist.

11. Kurzschlussläufer (1) nach einem der vorhergehenden Ansprüche, **dadurch gekennzeichnet, dass** der Läuferkäfig (5) ein geknüpftes Netz mit Seilsträngen (11) aus Kohlenstoffnanoröhren umfasst, wobei das Netz um den Läuferkern (3) gewickelt ist.

12. Kurzschlussläufer (1) nach einem der vorhergehenden Ansprüche, **dadurch gekennzeichnet, dass** der Läuferkäfig (5) wenigstens eine aus Fasern von Kohlenstoffnanoröhren bestehende textile Matte (31) umfasst, die mit Ausnehmungen (33) versehen ist und um den Läuferkern (3) gewickelt ist.

13. Elektrische Maschine mit einem Kurzschlussläufer (1) nach einem der vorhergehenden Ansprüche.

## Claims

1. Cage rotor (1) for an electric machine having a rotor core (3) and an electrically conductive rotor cage (5) arranged around the rotor core (3), wherein the rotor cage (5) comprises fibres which are in each case spun from a plurality of carbon nanotubes, **characterised in that** the rotor cage (5) is formed from flexible conductor strands, wherein the conductor strands comprise a textile element formed from a plurality of fibres, which comprises at least one element (31) woven from fibres containing carbon nanotubes or at least one rope strand (11) formed from fibres containing carbon nanotubes.

2. Cage rotor (1) according to claim 1, wherein the rotor cage (5) comprises a plurality of longitudinal rods (7) and two end-side connecting structures (9) which in each case join at least some of the longitudinal rods (7) to one another in an electrically conductive manner.

3. Cage rotor (1) according to one of the preceding claims, wherein the rotor cage (5) comprises several rope strands (11) composed of carbon nanotubes.

4. Cage rotor (1) according to claim 3, wherein the rotor cage (5) has a plurality of longitudinal rods (7) and two end-side connecting structures (9), wherein at least some of the rope strands (11) extend both over some of the longitudinal rods (7) and over at least one connecting structure (9).

5. Cage rotor (1) according to claim 3 or 4, wherein the rotor cage (5) has a plurality of longitudinal rods (7) and two end-side connecting structures (9), wherein the longitudinal rods (7) and the connecting structures (9) are linked to one another by means of knots (13) in the rope strands (11).

6. Cage rotor (1) according to one of the preceding claims, wherein the rotor core (3) is formed substantially from a soft magnetic material.

7. Cage rotor (1) according to one of the preceding claims, **characterised in that** the rotor core (3) has a plurality of slots (15) which accommodate a plurality of longitudinal rods (7) of the rotor cage (5).

8. Cage rotor (1) according to claim 7, **characterised in that** the rotor cage (5) comprises at least one rope strand (11) formed from carbon nanotubes which is wrapped under initial tension into the slots (15) of the rotor core (3).

9. Cage rotor (1) according to claim 8, **characterised in that** the rotor cage (5) and the rotor core (3) together form a mechanically self-supporting structure.

10. Cage rotor (1) according to one of claims 8 or 9, **characterised in that** the at least one rope strand (11) of the rotor cage (5) is wrapped into the slots (15) of the rotor cage (5) in multiple layers.

11. Cage rotor (1) according to one of the preceding claims, **characterised in that** the rotor cage (5) comprises a braided net having rope strands (11) composed of carbon nanotubes, wherein the net is wound around the rotor core (3).

12. Cage rotor (1) according to one of the preceding claims, **characterised in that** the rotor cage (5) comprises at least one textile mat (31) consisting of fibres of carbon nanotubes which is provided with cutouts (33) and is wound around the rotor core (3).

13. Electric machine having a cage rotor (1) according to one of the preceding claims.

## Revendications

1. Rotor (1) en court-circuit d'une machine électrique, comprenant un noyau (3) de rotor et une cage (5) de rotor conductrice de l'électricité disposée autour du noyau (3) du rotor,
dans lequel la cage (5) du rotor comprend des fibres, qui sont filées chacune à partir d'une pluralité de nanotubes de carbone,
**caractérisé en ce que** la cage (5) du rotor est formée de brins conducteurs souples, les brins conducteurs comprenant un élément textile formé d'une pluralité de fibres, qui comprend au moins un élément (31) tissé en fibres contenant des nanotubes de carbone ou au moins un brin (11) de câble formé de fibres contenant des nanotubes de carbone.

2. Rotor (1) en court-circuit suivant la revendication 1, dans lequel la cage (5) de rotor comprend une pluralité de longerons (7) et deux structures (9) de liaison du côté de l'extrémité, qui relient chacune au moins une partie des longerons (7) entre eux d'une manière conductrice de l'électricité.

3. Rotor (1) en court-circuit suivant l'une des revendications précédentes, dans lequel la cage (5) du rotor comprend plusieurs brins (11) de câble en nanotubes de carbone.

4. Rotor (1) en court-circuit suivant la revendication 3, dans lequel la cage (5) du rotor a une pluralité de longerons (7) et deux structures (9) de liaison du côté de l'extrémité, au moins une partie des brins (11) de câble s'étendant à la fois sur une partie des longerons (7) et sur au moins une structure (9) de liaison.

5. Rotor (1) en court-circuit suivant la revendication 3 ou 4, dans lequel la cage (5) du rotor a une pluralité de longerons (7) et deux structures (9) de liaison du côté de l'extrémité, les longerons (7) et les structures (9) de liaison étant combinés les unes aux autres par des noeuds (13) dans les brins (11) de câble.

6. Rotor (1) en court-circuit suivant l'une des revendications précédentes, dans lequel le noyau (3) du rotor est constitué essentiellement d'un matériau à magnétisme doux.

7. Rotor (1) en court-circuit suivant l'une des revendications précédentes, **caractérisé en ce que** le noyau (3) du rotor a une pluralité de encoches (15), qui reçoivent une pluralité de longerons (7) de la cage (5) du rotor.

8. Rotor (1) en court-circuit suivant la revendication 7, **caractérisé en ce que** la cage (5) du rotor comprend au moins un brin (11) rigide en nanotubes de carbone, qui est enroulé sous précontrainte dans les encoches (15) du noyau (3) du rotor.

9. Rotor (1) en court-circuit suivant la revendication 8, **caractérisé en ce que** la cage (5) du rotor et le noyau (3) du rotor forment ensemble une structure autoportante mécaniquement.

10. Rotor (1) en court-circuit suivant l'une des revendications 8 ou 9, **caractérisé en ce que** le au moins un brin (11) de câble de la cage (5) du rotor est enroulé en plusieurs couches dans les encoches (15) de la cage (5) du rotor.

11. Rotor (1) en court-circuit suivant l'une des revendications précédentes, **caractérisé en ce que** la cage (5) du rotor comprend un réseau combiné à des brins (11) de câble en nanotubes de carbone, le réseau étant enroulé autour du noyau (3) du rotor.

12. Rotor (1) en court-circuit suivant l'une des revendications précédentes, **caractérisé en ce que** la cage (5) du rotor comprend au moins une nappe (11) textile, constituée de fibres de nanotubes de carbone, qui est pourvue d'évidements (33) et enroulée autour du noyau (3) du rotor.

13. Machine électrique ayant un rotor (1) en court-circuit suivant l'une des revendications précédentes.
